(19) Europäisches Patentamt
European Patent Office
Office européen des brevets

(11) **EP 2 215 530 B1**

(12) **EUROPEAN PATENT SPECIFICATION**

(45) Date of publication and mention
of the grant of the patent:
**13.07.2011 Bulletin 2011/28**

(51) Int Cl.:
*G03H 1/22* (2006.01)  *G02F 1/1335* (2006.01)
*G02F 1/1343* (2006.01)

(21) Application number: **08846014.2**

(22) Date of filing: **27.10.2008**

(86) International application number:
**PCT/GB2008/051005**

(87) International publication number:
**WO 2009/056876 (07.05.2009 Gazette 2009/19)**

(54) **HOLOGRAPHIC IMAGE DISPLAY SYSTEMS**

SYSTEME ZUR ANZEIGE HOLOGRAPHISCHER BILDER

SYSTÈMES D'AFFICHAGE D'IMAGES HOLOGRAPHIQUES

(84) Designated Contracting States:
**AT BE BG CH CY CZ DE DK EE ES FI FR GR HR HU IE IS IT LI LT LU LV MC MT NL NO PL PT RO SE SI SK TR**

(30) Priority: **02.11.2007 GB 0721571**

(43) Date of publication of application:
**11.08.2010 Bulletin 2010/32**

(73) Proprietor: **Light Blue Optics Ltd.**
**Cambridge, Cambridgeshire CB4 0WS (GB)**

(72) Inventors:
• **CABLE, Adrian James**
**Cambridge, Cambridgeshire CB4 0WS (GB)**
• **ROUTLEY, Paul**
**Cambridge, Cambridgeshire CB4 0WS (GB)**

(74) Representative: **Martin, Philip John et al**
**Marks & Clerk LLP**
**62-68 Hills Road**
**Cambridge**
**CB2 1LA (GB)**

(56) References cited:
EP-A1- 0 540 759     EP-A2- 1 542 055
US-A- 5 694 189     US-A1- 2006 238 836

• ARRIZON V ET AL: "Efficiency limit of spatially quantized Fourier array illuminators" OPTICS LETTERS, OSA, OPTICAL SOCIETY OF AMERICA, WASHINGTON, DC, US, vol. 22, no. 4, 15 February 1997 (1997-02-15), pages 197-199, XP007905171 ISSN: 0146-9592
• EDWARD BUCKLEY ET AL: "Viewing angle enhancement for two- and three-dimensional holographic displays with random superresolution phase masks (dowloaded from the EVL on 26.09.2006)" APPLIED OPTICS, OSA, OPTICAL SOCIETY OF AMERICA, WASHINGTON, DC, vol. 45, no. 28, 26 September 2006 (2006-09-26), pages 7334-7341, XP007901162 ISSN: 0003-6935
• NORDIN G P ET AL: "LIQUID CRYSTAL-ON-SILICON IMPLEMENTATION OF THE PARTIAL PIXEL THREE-DIMENSIONAL DISPLAY ARCHITECTURE", APPLIED OPTICS, OPTICAL SOCIETY OF AMERICA, US LNKD- DOI: 10.1364/AO.34.003756, vol. 34, no. 19, 1 July 1995 (1995-07-01), pages 3756-3763, XP000537298, ISSN: 0003-6935

**Description**

FIELD OF THE INVENTION

This invention relates to methods and apparatus for displaying images holographically.

BACKGROUND TO THE INVENTION

We have previously described techniques for displaying an image holographically (see, for example, WO 2005/059660, WO 2006/134398, WO 2006/134404, WO 2007/031797, WO 2007/085874, and WO 2007/110668). They have a range of applications including, for example, in hand held battery powered devices such as digital cameras, mobile phones, portable media players, laptop computers and the like. In these and other applications there is, however, a general need to increase the operating efficiency.

Background prior art can be found in EP1702243A; EP1498766; and Palima D. and Daria V.R., "Holographic projection of arbitrary light patterns with a suppressed zero-order beam", 2007, Vol 46, No 20, Applied Optics. US2006/0238836 purports to describe a video holographic display which operates only when an observer's eyes are positioning at the image plane.

We will describe techniques which are able to achieve a substantial increase in efficiency, in particular with so-called multiphase spatial light modulators as distinct from binary phase spatial light modulators (that is SLMs which have more than two different selectable phase delay values for a pixel as opposed to binary devices in which a pixel has only one of two phase delay values). Multiphase SLMs include continuous phase SLMs, although when driven by digital circuitry these devices are necessarily quantised to a number of discrete phase delay values.

The techniques we have previously described for efficient computation of holograms to display on an SLM in order to reproduce a desired image (*ibid*) we broadly refer to as OSPR (One Step Phase Retrieval)-type procedures. Details of an example procedure are given later, but the skilled person will understand that the schemes for increasing efficiency we describe later are not limited to any particular method for calculating a hologram for display on an SLM in order to reproduce an image (which here includes a frame of a video), albeit that employing an OSPR-type procedure is advantageous.

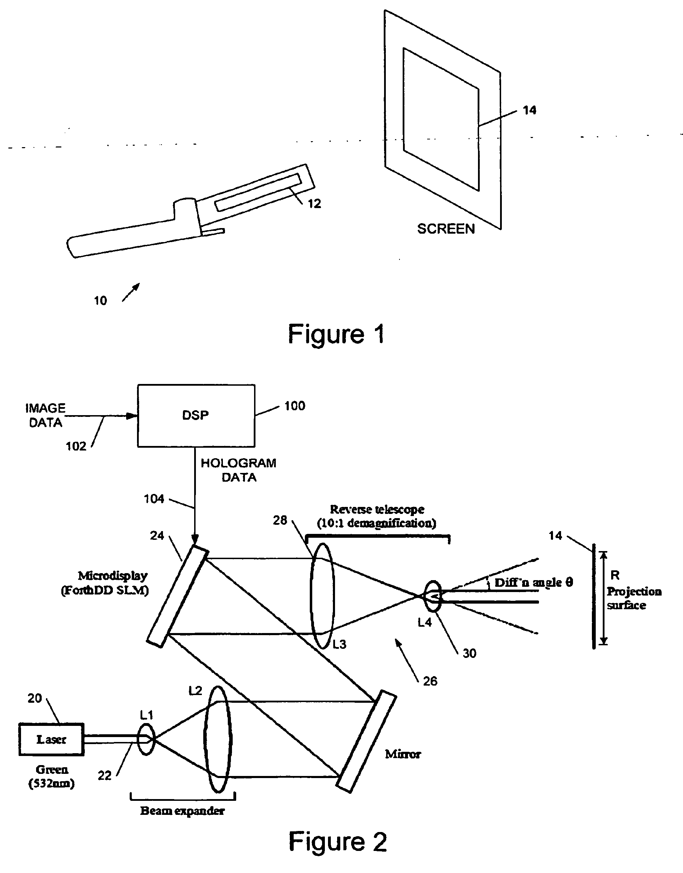

Figure 1 shows an example a consumer electronic device 10 incorporating a holographic image projection module 12 to project a displayed image 14. Displayed image 14 comprises a plurality of holographically generated sub-images each of the same spatial extent as displayed image 14, and displayed rapidly in succession so as to give the appearance of the displayed image.

Each holographic subframe may be generated using an OSPR-type procedure in which, broadly speaking, an image is displayed by displaying a plurality of holograms each of which spatially overlaps in the replay field. Each of which, when viewed individually, would appear relatively noisy because noise is added, for example by phase quantisation by the holographic transform of the image data. However when viewed in rapid succession the replay field images average together in the eye of a viewer to give the impression of a low noise image. The noise in successive temporal subframes may either be pseudo-random (substantially independent) or the noise in a subframe may be dependent on the noise in one or more earlier subframes, with the aim of at least partially cancelling this out, or a combination may be employed.

Figure 2 shows an example optical system for the holographic projection module of Figure 1. Referring to Figure 2, a laser diode 20 (for example, at 532nm), provides substantially collimated light 22 via a mirror to a spatial light modulator (SLM) 24 such as a pixellated liquid crystal modulator. (As illustrated, the SLM is a reflective SLM but a transmissive SLM may also be employed). The SLM 24 phase modulates light 22 with a hologram and the phase modulated light is preferably provided to a demagnifying optical system 26. In the illustrated embodiment, optical system 26 comprises a pair of lenses (L3, L4) 28, 30 with respective focal lengths $f_3$, $f_4$, $f_4 < f_3$, spaced apart at distance $f_3 + f_4$. Optical system 26 increases the size of the projected holographic image (replay field R) by diverging the light forming the displayed image; it effectively reduces the pixel size of the modulator, thus increasing the diffraction angle. Lenses $L_1$ and $L_2$ form a beam-expansion pair which expands the beam from the light source so that it covers the whole surface of the modulator; depending on the relative size of the beam 22 and SLM 24 this may be omitted. A spatial filter may be included to attenuate unwanted parts of the displayed image, for example a zero order undiffracted spot or a repeated first order (conjugate) image, which may appear as an upside down version of the displayed image, depending upon how the hologram for displaying the image is generated. However, for spatial filtering to be practical it is desirable that there is some spatial separation in the replay field between the displayed image and the portion of the replay field to be attenuated.

An example of a suitable binary phase SLM is the SXGA (1280× 1024) reflective binary phase modulating ferroelectric liquid crystal SLM made by CRL Opto (Forth Dimension Displays Limited, of Scotland, UK). A ferroelectric liquid crystal SLM is advantageous because of its fast switching time; binary phase devices are convenient but devices with three or more quantized phases (in the art, referred to as multiphase SLMs) may also be employed. Binary quantization results in a conjugate image whereas the use of more than binary phase suppresses the conjugate image (see WO 2005/059660).

A colour holographic projection system may be constructed by employing an optical system as described above to create three optical channels, red, blue and green superimposed to generate a colour image. In practice this is difficult because the different colour images must be aligned on the screen and a better approach is to create a time sequence of red, green and blue beams and provide these to a common SLM and demagnifying optics. In this case, however, the different colour images are of different sizes; techniques to address this are described in our co-pending UK patent application no. GB0610784.1 filed 2 June 2006.

Referring again to Figure 2, a digital signal processor 100 has an input 102 to receive image data from the consumer electronic device defining the image to be displayed. The DSP 100 implements an OSPR-type procedure to generate phase hologram data for a plurality of holographic sub-frames which is provided from an output 104 of the DSP 100 to the SLM 24, optionally via a driver integrated circuit if needed. The DSP 100 drives SLM 24 to project a plurality of phase hologram sub-frames which combine to give the impression of displayed image 14 in the replay field (RPF). The DSP 100 may comprise dedicated hardware and/or Flash or other read-only memory storing processor control code to implement the hologram generation procedure.

OSPR-type techniques substantially reduce the amount of computation required for a high quality holographic image display and the temporal averaging reduces the level of perceived noise. However there is a general need to increase the optical efficiency of holographic image display techniques.

SUMMARY OF THE INVENTION

A method of displaying a 2D image holographically using a spatial light modulator (SLM), said SLM having a plurality of SLM pixels, the method comprising: displaying a diffraction pattern on said pixels of said SLM; and illuminating said pixels of said SLM such that light diffracted by said diffraction pattern on said SLM pixels comprises a content of said image to be displayed holographically in a replay field, a variation in brightness of said displayed image across said displayed image being modulated by an intensity envelope determined by a diffraction pattern of an individual said pixel; and wherein the method is characterised by moving said intensity envelope away from a zero order undiffracted spot at the centre of said replay field and towards a centre of said displayed image by imposing a pattern of phase delay across said SLM pixels, said pattern of phase delay repeating at a spatial interval corresponding to a pixel interval of said SLM, and wherein said diffraction pattern is determined such that said displayed image is offset from said zero order undiffracted spot.

In embodiments of the method the pixels are square or rectangular and the pixel diffraction pattern comprises a sinc function (envelope), although theoretically pixels of a different shape, for example circular, may be employed which would have a different shape of diffraction pattern (for example a Bessel function if circular). In some embodiments of the method, for example those employing a binary phase SLM, a displayed image is offset from a zero order undiffracted spot because of the presence of a conjugate image. However where a multiphase SLM is employed there is no conjugate image but instead it is desirable to displace the displayed image away from the zero order undiffracted spot since otherwise this can interfere with the visual appearance of the displayed image. In either case the efficiency of the image display technique can be increased by displacing a peak or centre of gravity of the intensity envelope (determined by the diffraction pattern of an individual pixel, for example a sinc envelope) away from the zero order spot and towards the centre of the displayed image, in particular by imposing a regular, repeating pattern of phase delay across each pixel.

In embodiments of the method the image used to determined the diffraction pattern, for example by a Fourier (or inverse Fourier) transform is multiplied by the inverse of the pixel diffraction pattern, for example an inverse sinc function, prior to performing a holographic transform. This has the effect of partially compensating for light loss in the wings of the pixel diffraction pattern, for example converting a sinc function into an approximate top hat function. However whether or not some compensation for the pixel diffraction pattern is applied prior to transforming the image data into hologram data for display on the SLM, there is an efficiency gain to be achieved by moving the peak or centre of gravity of the overall intensity envelope away from the zero order undiffracted spot. In the case of a binary SLM this effectively moves the peak or centre of gravity of the intensity envelope towards the displayed image of the conjugate image pair (that is the image of the pair which has the desired orientation). In the case of a multiphase SLM embodiments of the technique enable the displayed image to be moved away from the undiffracted spot, avoiding the visual impairment of the image this would otherwise cause, the peak or centre of gravity of the intensity envelope being correspondingly moved. Embodiments of the technique are particularly advantageous when employed in the context of a multiphase SLM (that is an SLM having pixels with more than binary phase values) since in this case the peak or centre of gravity of the intensity envelope can be moved away from the undiffracted spot allowing the efficiency benefit of losing the conjugate image (an effective doubling of the efficiency) whilst at the same time avoiding problems with superimposition of the displayed image upon a bright central spot which would otherwise make the technique impractical. The difficulties of obtaining a high efficiency image at the centre of the output field with a multiphase SLM caused by the practical impossibility of completely suppressing the zero order bright spot have not previously been recognised. (This spot is effectively a focus as compared with light distributed over pixels of the image and therefore only a very small amount of light is needed for this spot to compete in brightness with a pixel of the displayed image).

In preferred embodiments the pattern of phase delay across each SLM pixel comprises a phase delay which increases across a pixel and then repeats, rather in the manner of a blazed grating. For a two-dimensional array of pixels, this "blaze" is applied in only one of two orthogonal directions in the array. Across a pixel the phase delay increases in a direction opposite to which the peak of the intensity envelope is moved.

In some preferred embodiments, rather than the phase delay comprising a linear increase in phase a stepped pattern is employed across a pixel, effectively quantising the phase delay across a pixel into two or more (for example, four, eight and so forth) steps. This has the advantage of facilitating fabrication and yet being almost as efficient as a linear increase over a pixel. In embodiments the phase delay pattern is configured to displace the peak or centre of gravity of the intensity envelope by a distance, at said displayed image, which corresponds to a change in phase shift of substantially $\pi/2$ across a pixel. Thus the pattern of phase changes preferably chosen to give substantially the same displacement of the peak or centre of gravity of the intensity envelope as would be provided by a linear zero to $\pi/2$ ramp phase delay pattern across a pixel. In embodiments the aim is for the peak of the sinc function or the centre of gravity of the top hat to be substantially at the middle of the displayed image and therefore a displacement corresponding to a phase delay of $\pi/2$ is preferred (recalling that a phase change of $2\pi$ would shift the envelope by one order).

In embodiments if the phase delay (or refractive index) is graded in one orthogonal direction, say the $\gamma$-direction in the hologram plane then the intensity envelope is moved in the same direction, say the v-direction where the image is displayed. Thus in embodiments of the method image data defining an image to be displayed is located in one half of an image data plane (for example by padding the image) bisected in a direction perpendicular to the direction in which the intensity envelope is moved, prior to performing a holographic transform, for example a Fourier or inverse Fourier transform to determine the diffraction pattern from data in both halves of the image data plane. Thus in embodiments the image to be displayed is effectively embedded in, say, the upper half of an image data plane prior to performing the holographic transform, and the pattern of phase delay on the SLM is arranged (graded in this example in a vertical direction) so that the reconstructed or replayed image is in the upper half of the replay field and so that the intensity envelope is moved towards the upper half of the replay field so that the displayed image and intensity envelope preferably substantially coincide.

In some preferred embodiments employing a stepped pattern of phase delay, rather than quantising at values of, say, zero and $\pi/2$, the stepped phase delays are chosen to be intermediate between these two values. More particularly in the case of a single step within each pixel (two different phase delay values) the phase delay values are preferably $\pi/4$ apart; with four steps the phase delays are preferably $\pi/8$ apart and, in general, the difference between phase delay values is preferably $\pi \div (2x$ the number of different phase delays across a pixel). This is a more accurate quantisation of the linear ramp than, say, in the two level case choosing values zero and $\pi/2$ and stems from the observation that phase delays wrap around and that, effectively, an arbitrary zero point may be selected.

In some preferred embodiments the SLM comprises a reflective SLM and the stepped phase delays are implemented as a series of stripes, for example one stripe per pixel, each stripe having a width of approximately half a pixel width (with this arrangement each pixel is effectively divided into two down the middle and therefore it could be considered that there are two stripes per pixel). In other arrangements there may be more stripes per pixel - for example in the case of four different phase delay values per pixel there may be three stripes per pixel (or four stripes per pixel, depending upon whether the "zero delay" stripe is counted).

Thus in a related aspect there is provided a spatial light modulator (SLM), in particular for use in a method or apparatus as described above, the SLM having a plurality of pixels and wherein said SLM has a pattern of phase delay across said pixels, said pattern comprising a phase delay which increases across a said pixel and repeats for each pixel.

In some preferred embodiments the SLM comprises a reflective liquid crystal SLM, more particularly a multiphase SLM. However other multiphase technologies may alternatively be employed.

In the case of a reflective SLM the SLM may conveniently be fabricated by etching a reflective, for example aluminium layer of the SLM to define the stripes. This is straightforward to implement with one (or more) additional etch steps at little additional cost.

The invention also provides apparatus for displaying a 2D image holographically, the apparatus comprising: a spatial light modulator (SLM), said SLM having a plurality of SLM pixels; means for displaying a diffraction pattern on said pixels of said SLM; a laser to illuminate said pixels of said SLM such that light diffracted by said diffraction pattern on said SLM pixels comprises a content of said image to be displayed holographically in a replay field" a variation in brightness of said displayed image across said displayed image being modulated by an intensity envelope determined by a diffraction pattern of an individual said pixel; and characterised in that said apparatus is configured to move said intensity envelope away from a zero order undiffracted spot at the centre of said replay field and towards a centre of said displayed image by imposing a pattern of phase delay across said SLM pixels, said pattern of phase delay repeating at a spatial interval corresponding to a pixel interval of said SLM, and wherein said diffraction pattern is determined such that said displayed image is offset from said zero order undiffracted spot.

Preferred embodiments of the apparatus include corresponding device features to those mentioned above in connection with preferred features of the aforementioned methods according to aspects and embodiments of the invention. In embodiments the apparatus may also include a system to perform a holographic transform on input image data to convert this to holographic data for display on the SLM. In some preferred embodiments of the apparatus, and of the foregoing methods, a diffraction pattern for display on the SLM is determined using an OSPR-type method (and thus multiple diffraction patterns may be displayed on the SLM to provide content for a smile displayed image or frame of video).

## BRIEF DESCRIPTION OF THE DRAWINGS

These and other aspects of the invention will now be further described, by way of example only, with reference to the accompanying figures in which:

Figure 1 shows an example of a consumer electronic device incorporating a holographic projection module;

Figure 2 shows an optical system for the holographic projection module of Figure 1;

Figures 3a to 3f show, respectively, a model of holographic image formation using an SLM, movement of a sinc attenuation peak as a result of applying a phase ramp to an SLM pixel, mapping of sinc pixel diffraction envelopes to a displayed image for a binary phase and for a multiphase SLM; and mapping of sinc pixel diffraction envelopes to a displayed image according to embodiments of the invention for a binary phase and for a multiphase SLM;

Figures 4a to 4d show, respectively, a simplified view from above and vertical cross section view of a reflective liquid crystal SLM, a schematic illustration of a shift in the peak intensity of a pixel diffraction envelope, and phase shifts for two adjacent example pixels illustrating a smooth phase shift ramp (left), a four step ramp approximation (middle; Q = 4 stripes) and a two step ramp approximation (right; Q = 2 stripes);

Figures 5a and 5b show, respectively, a simulated reconstruction field with sinc attenuation without a peak-shifting phase pattern applied to the SLM, and with a Q = 4 stripes peak shifting phase pattern applied to the SLM; and

Figure 6a and 6b show, respectively, a block diagram of an OSPR hologram data calculation system, and operations performed within the system of Figure 6a.

## DETAILED DESCRIPTION OF PREFERRED EMBODIMENTS

We will describe techniques for improving diffraction efficiency in holographic projection by shifting the SLM pixel diffraction (sinc attenuation) envelope.

Images formed holographically suffer from an effect known as "sinc attenuation", caused by the square pixels on the SLM imparting a sinc-shaped intensity modulation centred on the zero-order over the whole of the reconstruction field, resulting in an undesirable decrease in intensity towards the edges of the field. This results in two problems.

1. Image intensity is no longer uniform across the field. This can be compensated for by pre-multiplying the input image by the inverse of the modulating sinc envelope.

2. Points away from the centre of the sinc envelope are progressively attenuated, resulting in a significant decrease in diffraction efficiency. To be exact, light is moved from the edges of the first diffraction order (the first sinc lobe) into the unwanted higher diffraction orders (the sinc tails). Ideally therefore, to minimise this effect, the image should be centred around the peak of the sinc envelope, where its amplitude is closest to unity. Unfortunately, this is not practical because this would be where the zero-order (the focus of the undiffracted light) lies.

We describe super-imposing a substantially identical phase ramp on each SLM pixel to shift the sinc attenuation envelope so its centre lies at the centre of the image, minimising this drop in efficiency.

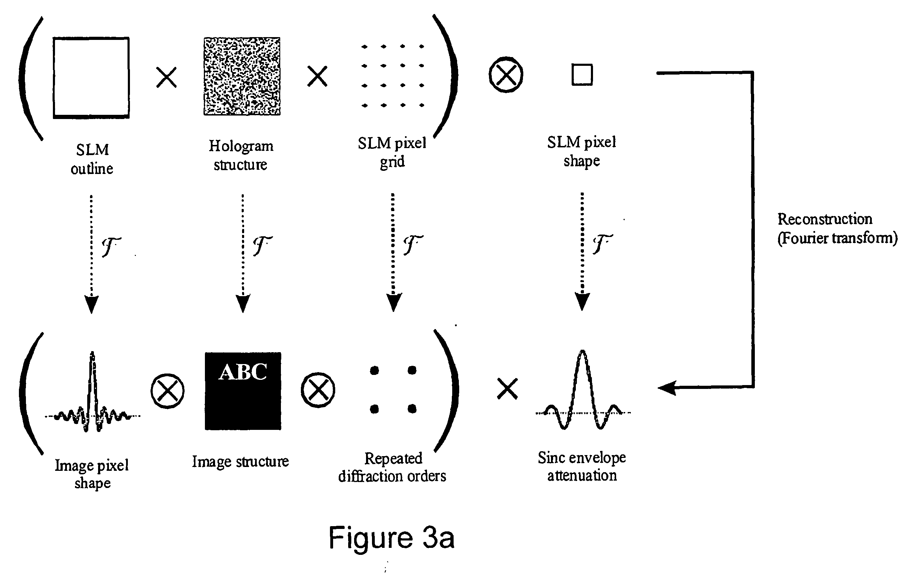

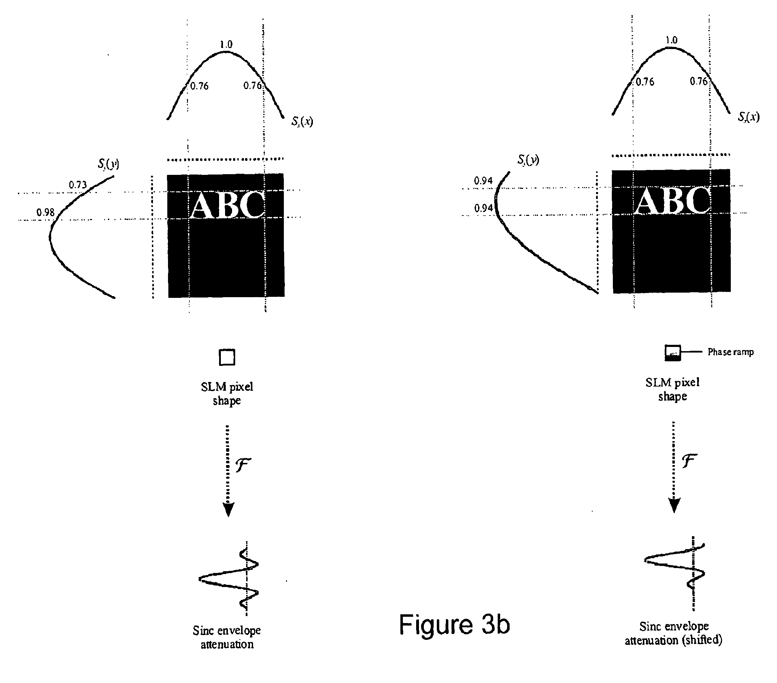

The reconstruction field obtained through holographic replay depends on the shape of the SLM, the hologram displayed on the device, the SLM's pixel sampling grid and the shape of the SLM pixel itself, as shown in Figure 3a. Plots are illustrative only and are not to scale, and the effect of the illumination profile is omitted for simplicity. Referring to Figure 3b, superimposition of the sinc attenuation profile (now with the correct scale) on the image (Figure 3b, left) shows how, in the x-direction, the sinc envelope is optimally centred on the image, whereas in the y-direction it is not.

Because a phase ramp in Fourier space corresponds to a position shift in image space, incorporating a phase ramp (with a gradient chosen to shift the y-direction by a quarter of the field height) into the SLM pixel unit would have the effect of shifting the sinc attenuation envelope onto the centre of the image as desired (Figure 3b, right). The effect would be to significantly decrease sinc attenuation in the *y*-direction and therefore improve diffraction efficiency, with the increase given by the ratio of the integrals of the energies of the respective sinc curves over the image area, which can be calculated to be 23%.

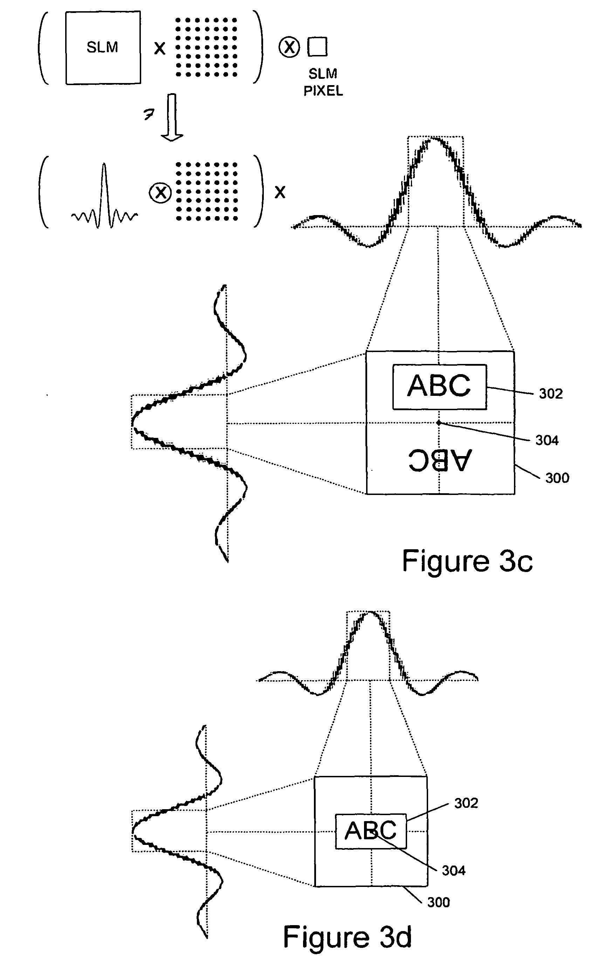

Figure 3c shows a simplified representation of the problem in the case of a binary phase SLM, where it can be seen that in the vertical direction the centre of the sinc envelope is aligned with the centre of the replay field 300 whereas the displayed image 302 is displaced above this and is thus in the tail of the sinc distribution. The dashed lines over the sinc envelopes correspond to an approximate top hat function which is obtained by multiplying the input image by the inverse of the pixel sinc function prior to applying a holographic, for example Fourier or Fresnel transform. The displayed image shown in Figure 3c also includes a central, zero order undiffracted spot 304. The maximum efficiency of the scheme of Figure 3c is 41 %. Figure 3d shows a display obtainable if a multiphase SLM is employed, lacking a conjugate image. The displayed image has been displaced to the centre of the replay field and this arrangement has a theoretical maximum efficiency of approximately 98%. However as can be seen the displayed image overlaps with the undiffracted spot 304 and in practice it is very difficult to reduce the brightness of this spot to a level at which it does not interfere with the image, in part because all the undiffracted light arrives at this spot which may therefore be intrinsically much brighter than a pixel of the image.

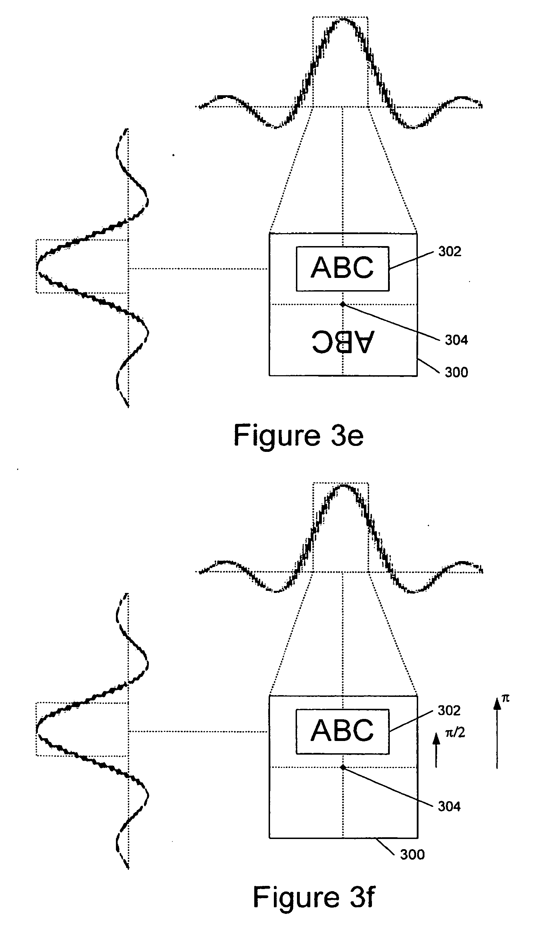

Referring now to Figure 3e, this shows, conceptually, an embodiment of the scheme which displaces the vertical sinc envelope so that its peak coincides with the displayed image 302. This provides a significant increase in efficiency, of perhaps 20%, for a binary phase SLM. However a preferable arrangement is that shown in Figure 3f, which employs a multiphase SLM to display an image 302 which is displaced away from undiffracted spot 304, hence providing the efficiency advantages of use of a multiphase SLM without the visually distracting undiffracted spot being-present within the displayed image. As can be seen from Figure 3f, the displayed image is displaced by a distance corresponding to a phase change of $\pi/2$ across an SLM pixel (this can be understood by recognising that a phase change of $\pi$ corresponds to the edge of the replay field).

We now describe how the pixel diffraction envelope can be displaced as shown in Figures 3b, 3e and 3f. Broadly speaking this is achieved by applying a phase grating to the SLM pixels, more particularly a linear phase ramp across each pixel in one direction within the SLM pixel array. This linear ramp results in a change in the position of the diffraction pattern in a direction within the replay field corresponding to the direction in the SLM in which the phase changes. In practice rather than applying a linear ramp to each pixel the phase change applied to a pixel is quantised, for example in two steps (which provides 18% efficiency gain) or four steps (which provides 22% efficiency gain, almost the same as that which would be achieved by a linear ramp). As explained in more detail below, such a stepped phase change repeating each pixel may be readily achieved when fabricating an SLM by the use of an additional etch step.

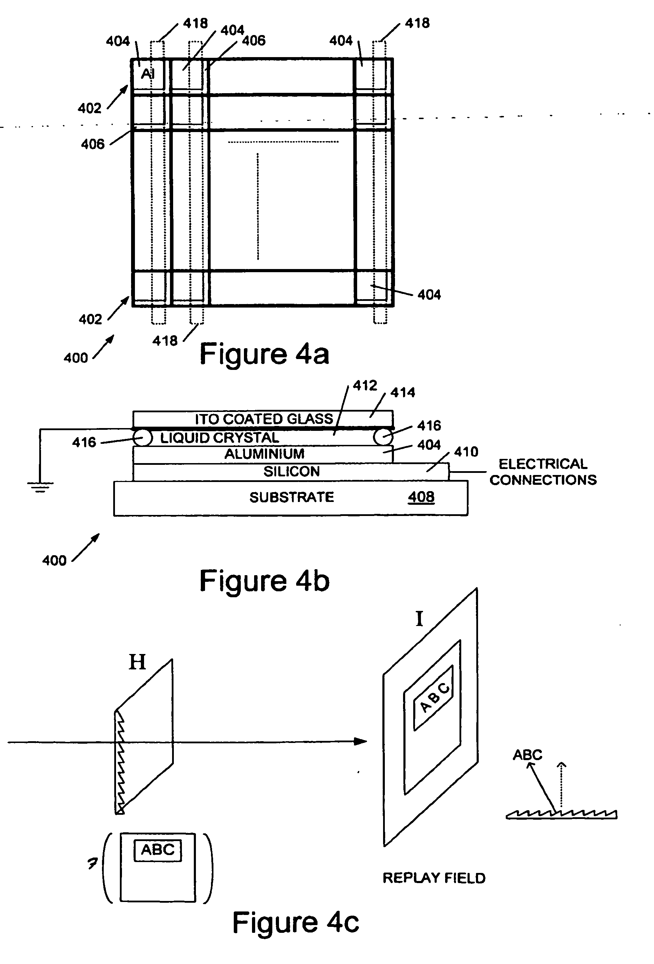

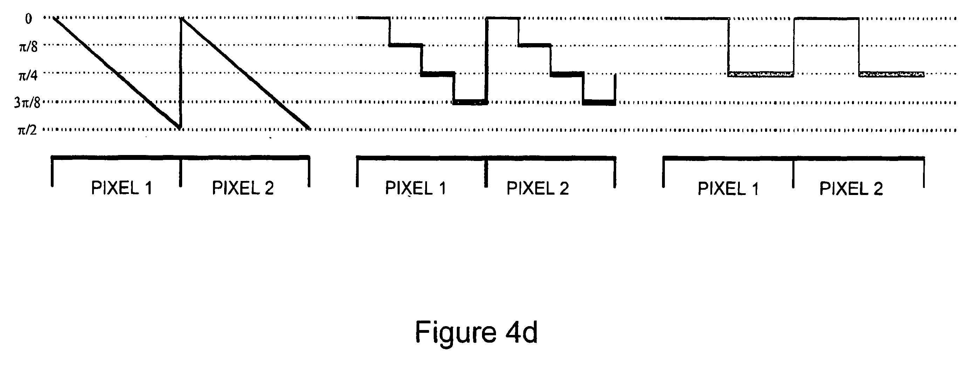

Referring now to Figure 4, this shows a simplified schematic view from above of a reflective liquid crystal spatial light modulator (SLM) 400. However, the skilled person will understand that the techniques and principles we describe are not limited to this particular SLM design. Referring to Figure 4a each pixel 402 comprises a reflective layer of aluminium 404 around which is a non-conducting region 406 to prevent adjacent pixels shorting out. Figure 4b shows, schematically, a vertical cross section through a pixel 402, where it can be seen that the SLM comprises a substrate 408, typically a printed circuit board, on which is mounted silicon circuitry 410 with electrical connections, the circuitry connecting to the reflective aluminium 404 to provide one contact to a liquid crystal cell 412. A second contact is provided by a top layer 414 for example of indium tin oxide (ITO) coated glass, which provides an earth connection. Beads 416, for example embedded in glue around the edge of the SLM, maintain a separation between the two conducting faces of the liquid crystal cell 412. (The separation is generally small and there is little sag).

Referring again to Figure 4a, by etching stripes 418 across columns of pixels each stripe being a fraction of the width of a pixel, the thickness of the aluminium 404 can be reduced thereby increasing the phase delay within that region of the liquid crystal of a pixel. It will be appreciated that, depending upon the number of phase steps desired within a pixel width, one or more (overlapping) stripes may be etched.

Referring now to Figure 4c, this shows, conceptually, the hologram plane *H* and the image plane *I* illustrating how the "blazed" phase delay across the pixels moves the SLM pixel diffraction envelope. As illustrated the displayed image is moved correspondingly to coincide with the diffraction envelope, by embedding the data for the input image in a larger array prior to performing the holographic transform. (It will be understood that this embedding is conceptual and may be achieved in practice by padding with zeros, in which case there need not actually be memory storing data for the "padded" region).

We next describe the effect of quantisation of the (conceptual) pixel phase ramp.

The above analysis referred to applying a linear phase ramp to each SLM pixel. In practice, it is preferable, for ease of fabrication, to divide each pixel into a finite number $Q$ of stripes which together form a quantised grating to shift the sinc envelope in the desired way. The larger the $Q$, the closer the pixel comes to resemble a smooth phase ramp, and so the closer the actual gain to the theoretical improvement possible of 23%. Because phase is relative, we can fix the phase shift of the first stripe to zero and define the others relative to that, therefore meaning that $Q - 1$ additional mask steps are required when manufacturing the display. So choice of $Q$ in a real application is dependent on the trade-off between cost due to the additional fabrication steps and the increasing efficiency gain. We have found that $Q = 2$ (i.e. one additional mask step) gives an improvement of around 18%, with $Q = 4$ (three additional mask steps) giving an improvement of 22%. Therefore there is little point going above $Q = 4$. Indeed, due to relative ease of manufacture, $Q = 2$ may represent the optimum trade-off between cost/complexity and performance.

## Quantised Phase Shifts

On a pixel featuring a linear phase ramp (i.e. $Q$ large or theoretically infinite), the phase change across the pixel should be $\dfrac{\pi}{2}$ (Figure 4d, left). For a real system with $Q$ stripes, the required phase shifts P are given by

$$0, \frac{1}{2Q}\pi, \frac{2}{2Q}\pi, ..., \frac{Q-1}{2Q}\pi$$

As an example, for Q = 2 the phase shifts are 0 and $\dfrac{\pi}{4}$ (Figure 4d, right). For $Q$ = 4, the phase shifts are 0, $\dfrac{\pi}{8}$, $\dfrac{\pi}{4}$ and $\dfrac{3\pi}{8}$, as shown in Figure 4d, middle.

If this SLM sub-pixel structure is created by further etching the aluminium pixel layer in a device, how a given phase shift $P$ relates to the required etch depths $d$ is determined by the refractive index n of the liquid crystal material according to the relation

$$d = \frac{P\lambda}{2\pi n}$$

where λ may be chosen to be equal to the central design wavelength of the display, nominally green (532 nm). So, if we choose $Q$=2 and an LC material with $n$ = 1.4, an additional processing step would be employed involving etching half of each pixel's aluminium layer by an additional depth of 47.5 nm. Equally, instead of etching, additional aluminium of this thickness could be deposited onto the existing layer.

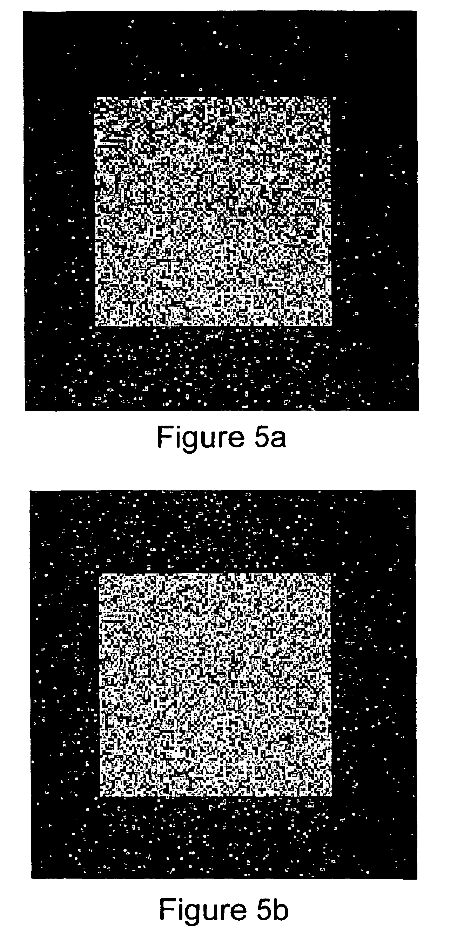

The images shown in Figure 5 demonstrate the improvement in diffraction efficiency possible using the technique, simulating the reconstruction field obtained for a single binary hologram for simplicity. For the sake of example, no sinc envelope compensation is applied. The simulated display of Figure 5a lacks a pixel phase ramp; that of Figure 5b is simulated for Q = 4 stripes on each pixel. A significantly increased amount of light is present in the reconstruction field obtained using the striped-pixel display. Also worthy of note in this example is that, due to the adjusted centring of the sinc envelope onto the image, the amount of sinc envelope compensation employed may be significantly reduced, which can lead to benefits in computation time or a reduction in the precision used in the image pre-processing stage.

Some preferred implementations of the above-described techniques are employed with an OSPR-type procedure, although applications of the techniques are not limited to such procedures. We therefore briefly describe such procedures. Further details can be found in our earlier applications (*ibid*).

### OSPR

Broadly speaking in our preferred method the SLM is modulated with holographic data approximating a hologram of the image to be displayed. However this holographic data is chosen in a special way, the displayed image being made up of a plurality of temporal sub-frames, each generated by modulating the SLM with a respective sub-frame hologram. These sub-frames are displayed successively and sufficiently fast that in the eye of a (human) observer the sub-frames (each of which have the spatial extent of the displayed image) are integrated together to create the desired image for display. Temporal averaging amongst the sub-frames reduces the perceived level of noise even though each sub-frame, were it to be viewed separately, would appear relatively noisy.

The OSPR procedure is a method of generating, for each image $\mathbf{I} = I_{xy}$, sets of $N$ binary-phase holograms $\mathbf{h}^{(1)}$... $\mathbf{h}^{(N)}$. In embodiments such sets of holograms form replay fields that exhibit mutually independent additive noise. An example is shown below:

1. Let $G_{xy}^{(n)} = I_{xy} \exp\left( j\varphi_{xy}^{(n)} \right)$ where $\varphi_{xy}^{(n)}$ is uniformly distributed between 0 and $2\pi$ for $1 \leq n \leq N/2$ and $1 \leq x, y \leq m$

2. Let $g_{uv}^{(n)} = F^{-1}\left[ G_{xy}^{(n)} \right]$ where $F^{-1}$ represents the two-dimensional inverse Fourier transform operator, for $1 \leq n \leq N/2$

3.

$$\text{Let } m_{uv}^{(n)} = \Re\{g_{uv}^{(n)}\} \text{ for } 1 \leq n \leq N/2$$

4.

$$\text{Let } m_{uv}^{(n+N/2)} = \Im\{g_{uv}^{(n)}\} \text{ for } 1 \leq n \leq N/2$$

5.

$$\text{Let } h_{uv}^{(n)} = \begin{cases} -1 & \text{if } m_{uv}^{(n)} < Q^{(n)} \\ 1 & \text{if } m_{uv}^{(n)} \geq Q^{(n)} \end{cases} \text{ where } Q^{(n)} = \text{median}\left( m_{uv}^{(n)} \right)$$

and

$$1 \leq n \leq N$$

Step 1 forms $N$ targets $G_{xy}^{(n)}$ equal to the amplitude of the supplied intensity target $I_{xy}$, but with independent identically distributed (i.i.d), uniformly-random phase. Step 2 computes the $N$ corresponding full complex Fourier transform holograms $g_{uv}^{(n)}$. Steps 3 and 4 compute the real part and imaginary part of the holograms, respectively. In this example routine binarisation of each of the real and imaginary parts of the holograms is performed in step 5 (thresholding around the median $m_{uv}^{(n)}$, or zero aims to ensure substantially equal numbers of -1 and 1 points are present in the holograms, for DC balance).

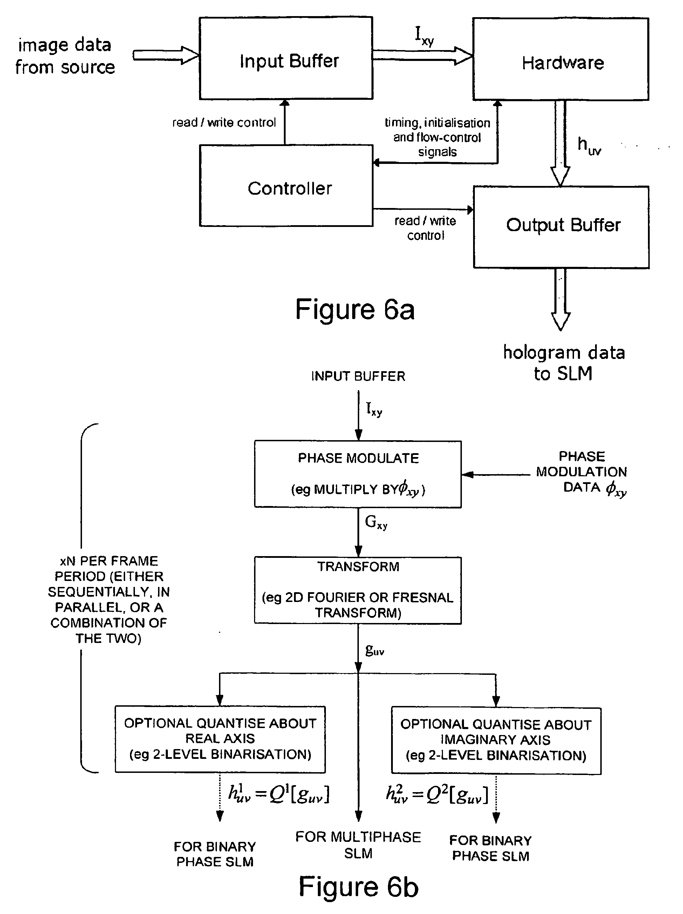

Figure 6a shows a block diagram of a hologram data calculation system to implement this procedure. Input image data is temporarily stored in one or more input buffers, with control signals supplied from a controller. The input (and output) buffers preferably comprise dual-port memory such that data may be written into the buffer and read out from the buffer simultaneously. The control signals comprise timing, initialisation and flow-control information so that one or more holographic sub-frames are produced and sent to the SLM per video frame period. The output from the input buffer comprises an image frame, I, and this becomes the input to a hardware block (although in other embodiments some or all of the processing may be performed in software) which performs a series of operations on each of the image frames, I, and for each one produces one or more holographic sub-frames, h, which are sent to an output buffer and supplied from there to a display device such as a SLM, optionally via a driver chip.

Figure 6b shows details of the system of Figure 6a, comprising a set of elements designed to generate one or more holographic sub-frames for each image frame. Preferably one image frame, $I_{xy}$, is supplied one or more times per video frame period as an input. Each image frame, $I_{xy}$, is then used to produce one or more holographic subframes by means of a set of operations comprising one or more of: a phase modulation stage, a space-frequency transformation stage and an optional quantisation stage. In embodiments, a set of N sub-frames, where N is greater than or equal to one, is generated per frame period by means of using either one sequential set of the aforementioned operations, or a several sets of such operations acting in parallel on different sub-frames, or a mixture of these two approaches. The phase-modulation stage redistributes the energy of the input frame more evenly throughout the spatial-frequency domain such that improvements in final image quality are obtained after performing later operations. An optional quantisation stage takes complex hologram data from the preceding space-frequency transform and maps it to a restricted set of values which correspond to actual modulation levels that can be achieved on a target, e.g. binary phase, SLM (real and imaginary components can be used, without ADOSPR- see below, to generate a pair of holographic sub-frames). In some preferred embodiments of the technique however a multiphase SLM is employed, in which case a separate quantisation stage is not needed. In this case a conjugate image is not formed.

In the OSPR approach we have described above subframe holograms are generated independently and thus exhibit independent noise. However the generation process for each subframe can take into account the noise generated by the previous subframes in order to cancel it out, effectively "feeding back" the perceived image formed after, say, $n$ OSPR frames to stage $n+1$ of the procedure, forming a closed-loop system. Such an adaptive (AD) OSPR procedure uses feedback as follows: each stage $n$ of the algorithm calculates the noise resulting from the previously generated holograms $H_1$ to $H_{n-1}$, and factors this noise into the generation of the hologram $H_n$ to cancel it out. As a result, noise variance falls as $1/N^2$ (where a target image $T$ outputs a set of $N$ holograms). More details can be found in WO2007/031797 and WO2007/085874.

Applications for the described techniques and modulators include, but are not limited to the following: mobile phone; PDA; laptop; digital camera; digital video camera; games console; in-car cinema; navigation systems (in-car or personal e.g. wristwatch GPS); head-up and helmet-mounted displays for automobiles and aviation; watch; personal media player (e.g. MP3 player, personal video player); dashboard mounted display; laser light show box; personal video projector (a "video iPod (RTM)" concept); advertising and signage systems; computer (including desktop); remote control unit; an architectural fixture incorporating a holographic image display system; more generally any device where it is desirable to share pictures and/or for more than one person at once to view an image.

No doubt many effective alternatives will occur to the skilled person and it will be understood that the invention is not limited to the described embodiments and encompasses modifications apparent to those skilled in the art lying within the scope of the claims appended hereto.

**Claims**

1. A method of displaying a 2D image (302) holographically using a spatial light modulator (SLM), said SLM (400) having a plurality of SLM pixels (402), the method comprising:

   determining and displaying a diffraction pattern on said pixels of said SLM; and
   illuminating said pixels of said SLM such that light diffracted by said diffraction pattern on said SLM pixels comprises a content of said image (302) to be holographically displayed in a replay field, wherein variation in brightness of said displayed image across said displayed image is modulated by an intensity envelope determined by a diffraction pattern of an individual said pixel; and wherein the method is **characterised by** moving said intensity envelope away from a zero order undiffracted spot (304) at the centre of said replay field and towards a centre of said displayed image (302) by imposing a pattern of phase delay across said SLM pixels, said pattern of phase delay repeating at a spatial interval corresponding to a pixel interval of said SLM, and wherein said diffraction pattern is determined such that said displayed image is offset from said zero order undiffracted spot.

2. A method as claimed in claim 1 wherein said SLM comprises a multiphase SLM in which a said SLM pixel has greater than two selectable phase delays, wherein said diffraction pattern displayed on said pixels of said SLM comprises a pattern with more than two different phase values, and wherein the method further comprises determining said diffraction pattern for displaying such that a conjugate image to said displayed image is suppressed.

3. A method as claimed in claim 1 or 2 wherein said pattern of phase delay across the said SLM pixels comprises a phase delay which increases across a said pixel and repeats for each pixel.

4. A method as claimed in claim 3 wherein said phase delay increases in a direction opposite to which said intensity envelope is moved.

5. A method as claimed in claim 4 further comprising inputting image data defining said image to be displayed holographically; locating said image defined by said image data in one half of an image data plane bisected in a direction perpendicular to said direction opposite to which said intensity envelope is moved; and then determining said diffraction pattern from data in both halves of said image data plane.

6. A method as claimed in any preceding claim wherein said SLM is a reflective SLM and wherein said pattern of phase delay across the said SLM pixels comprises a phase delay pattern configured to displace said intensity envelope by a distance, at said displayed image, which corresponds to a change in phase shift of substantially $\pi/2$ across a said pixel.

7. A method as claimed in claim 6 wherein said pattern of phase delay comprises a stepped pattern with a stepped phase shift across each said SLM pixel said stepped phase shift having two or more different phase delays.

8. A method as claimed in claim 7 further comprising determining a difference between phase delays of said different phase delays across a said SLM pixel according to the equation:

$$step = \pi \div (2x\ levels)$$

where *step* is the difference between phase delays and *levels* is the number of different phase delays.

9. A method as claimed in claim 7 or 8 wherein said SLM comprises a reflective SLM, and wherein said stepped pattern comprises a pattern of stripes across a reflective portion of said SLM in a direction substantially perpendicular to a direction in which said intensity envelope is moved.

10. A method as claimed in any preceding claim further comprising determining said diffraction pattern for displaying using an OSPR-type method.

11. Apparatus for displaying a 2D image holographically, the apparatus comprising:

a spatial light modulator (SLM), said SLM (400) having a plurality of SLM pixels (402);
means (100) for determining and displaying a diffraction pattern on said pixels of said SLM;
a laser (20) to illuminate said pixels of said SLM such that light diffracted by said diffraction pattern on said SLM pixels comprises a content of said image (302) to be holographically displayed in a replay field, wherein a variation in brightness of said displayed image across said displayed image is modulated by an intensity envelope determined by a diffraction pattern of an individual said pixel; and

**characterised in that** said apparatus is configured to move said intensity envelope away from a zero order undiffracted spot (304) at the centre of said replay field and towards a centre of said displayed image (302) by imposing a pattern of phase delay across said SLM pixels, said pattern of phase delay repeating at a spatial interval corresponding to a pixel interval of said SLM, and wherein said diffraction pattern is determined such that said displayed image is offset from said zero order undiffracted spot.

12. Apparatus as claimed in claim 11 wherein said spatial light modulator (SLM) has a pattern of phase delay across said pixels, said pattern comprising a phase delay which increases across a said pixel and repeats for each pixel.

13. Apparatus as claimed in claim 12 wherein said pixels define two substantially orthogonal directions in a plane of said SLM, wherein said phase delay increases across a said pixel and repeats for each pixel in one of said orthogonal directions, and wherein said phase delay is substantially constant in the other of said orthogonal directions.

14. Apparatus as claimed in claim 12 or 13 wherein said pattern of phase delay comprises a stepped pattern with a stepped phase shift across each said SLM pixel said stepped phase shift having two or more different phase delays, in particular
wherein a difference between phase delays of said different phase delays across a said SLM pixel is determined according to the equation:

$$step = \pi \div \left(2x\ levels\right)$$

where *step* is the difference between phase delays and *levels* is the number of different phase delays.

15. Apparatus as claimed in claim 12, 13 or 14 wherein said SLM comprises a reflective liquid crystal SLM, and wherein said pattern comprises substantially parallel stripes, at least one said stripe per line of pixels, each said stripe comprising regions within respective pixels of a line of pixels of the SLM, a said region within a said pixel having a differing phase delay to another said region within the same said pixel.

**Patentansprüche**

1. Verfahren zur holografischen Anzeige eines 2D-Bilds (302) unter Verwendung eines Raumlichtmodulators (SLM), wobei der SLM (400) eine Vielzahl von SLM-Bildpunkten (402) aufweist, das Verfahren umfassend:

Bestimmen und Anzeigen eines Brechungsmusters auf den Bildpunkten des SLM; und
Beleuchten der Bildpunkte des SLM derart, dass Licht, das durch das Brechungsmuster auf den SLM-Bildpunkten gebrochen wird, einen Inhalt des Bilds (302) umfasst, das holografisch in einem Wiedergabefeld anzuzeigen ist, wobei eine Variation in der Helligkeit des angezeigten Bilds über das angezeigte Bild durch eine Intensitätshüllkurve moduliert wird, die durch ein Brechungsmuster eines individuellen der Bildpunkte bestimmt wird; und wobei das Verfahren **gekennzeichnet ist durch** Bewegen der Intensitätshüllkurve weg von einem nicht gebrochenen Ort (304) nullter Ordnung in der Mitte des Wiedergabefelds und hin zu einer Mitte des angezeigten Bilds (302) **durch** Überlegen eines Musters von Phasenverzögerung über die SLM-Bildpunkte, wobei das Muster von Phasenverzögerung sich in einem räumlichen Intervall, das mit einem Bildpunktintervall des SLM korrespondiert, wiederholt und wobei das Brechungsmuster derart bestimmt wird, dass das angezeigte Bild von dem nicht gebrochenen Ort nullter Ordnung versetzt wird.

2. Verfahren nach Anspruch 1, wobei der SLM einen Mehrphasen-SLM umfasst, in dem einer der SLM-Bildpunkte größer als zwei auswählbare Phasenverzögerungen hat, wobei das Brechungsmuster, das auf den Bildpunkten des SLM angezeigt wird, ein Muster mit mehr als zwei verschiedenen Phasenwerten umfasst, und wobei das Verfahren weiter umfasst, das Brechungsmuster für die Anzeige derart zu bestimmen, dass ein zu dem angezeigten Bild konjugiertes Bild unterdrückt wird.

3. Verfahren nach Anspruch 1 oder 2, wobei das Muster von Phasenverzögerung über die SLM-Bildpunkte eine Phasenverzögerung umfasst, die über einen der Bildpunkte zunimmt und sich für jeden Bildpunkt wiederholt.

4. Verfahren nach Anspruch 3, wobei die Phasenverzögerung in einer Richtung zunimmt, die der gegenüberliegt, in die die Intensitätshüllkurve bewegt wird.

5. Verfahren nach Anspruch 4, weiter umfassend, Bilddaten einzugeben, die das Bild definieren, das holografisch anzuzeigen ist; das Bild, das durch die Bilddaten definiert wird, in einer Hälfte einer Bilddatenebene, die in einer Richtung senkrecht zu der Richtung gegenüber der, in die die Intensitätshüllkurve bewegt wird, halbiert ist, zu lokalisieren; und dann das Brechungsmuster aus Daten in beiden Hälften der Bilddatenebene zu bestimmen.

6. Verfahren nach einem der vorstehenden Ansprüche, wobei der SLM ein reflektierender SLM ist und wobei das Muster von Phasenverzögerung über die SLM-Bildpunkte ein Phasenverzögerungsmuster umfasst, das konfiguriert ist, um die Intensitätshüllkurve um eine Distanz an dem angezeigten Bild zu verlagern, die mit einer Änderung der Phasenverschiebung um im Wesentlichen $\pi/2$ über einen der Bildpunkte korrespondiert.

7. Verfahren nach Anspruch 6, wobei das Muster von Phasenverzögerung ein gestuftes Muster mit einer gestuften Phasenverschiebung über jeden der SLM-Bildpunkte umfasst, wobei die gestufte Phasenverschiebung zwei oder mehr verschiedene Phasenverzögerungen aufweist.

8. Verfahren nach Anspruch 7, weiter umfassend, eine Differenz zwischen Phasenverzögerungen der verschiedenen Phasenverzögerungen über einen der SLM-Bildpunkte gemäß der Gleichung:

$$step = \pi \div (2\ x\ levels)$$

zu bestimmen, wobei *step* die Differenz zwischen Phasenverzögerungen ist und *levels* die Zahl der verschiedenen Phasenverzögerungen ist.

9. Verfahren nach Anspruch 7 oder 8, wobei der SLM einen reflektierenden SLM umfasst und wobei das gestufte Muster ein Muster von Streifen über einen reflektierenden Abschnitt des SLM in einer Richtung, die im Wesentlichen senkrecht zu einer Richtung ist, in der die Intensitätshüllkurve bewegt wird, umfasst.

10. Verfahren nach einem der vorstehenden Ansprüche, weiter umfassend, das Brechungsmuster für die Anzeige unter Verwendung eines Verfahrens in OSPR-Ausführung zu bestimmen.

11. Vorrichtung zur holografischen Anzeige eines 2D-Bilds, die Vorrichtung umfassend:

einen Raumlichtmodulator (SLM), wobei der SLM (400) eine Vielzahl von SLM-Bildpunkten (402) aufweist;
Mittel (100) zum Bestimmen und Anzeigen eines Brechungsmusters auf den Bildpunkten des SLM;

einen Laser (20) zum Beleuchten der Bildpunkte des SLM derart, dass Licht, das durch das Brechungsmuster auf den SLM-Bildpunkten gebrochen wird, einen Inhalt des Bilds (302) umfasst, das holografisch in einem Wiedergabefeld anzuzeigen ist, wobei eine Variation in der Helligkeit des angezeigten Bilds über das angezeigte Bild durch eine Intensitätshüllkurve moduliert wird, die durch ein Brechungsmuster eines individuellen der Bildpunkte bestimmt wird; und
**dadurch gekennzeichnet, dass** die Vorrichtung konfiguriert ist zum Bewegen der Intensitätshüllkurve weg von einem nicht gebrochenen Ort (304) nullter Ordnung in der Mitte des Wiedergabefelds und hin zu einer Mitte des angezeigten Bilds (302) durch Überlegen eines Musters von Phasenverzögerung über die SLM-Bildpunkte, wobei das Muster von Phasenverzögerung sich in einem räumlichen Intervall, das mit einem Bildpunktintervall des SLM korrespondiert, wiederholt, und wobei das Brechungsmuster derart bestimmt wird, dass das angezeigte Bild von dem nicht gebrochenen Ort nullter Ordnung versetzt wird.

12. Vorrichtung nach Anspruch 11, wobei der Raumlichtmodulator (SLM) ein Muster von Phasenverzögerung über die Bildpunkte aufweist, wobei das Muster eine Phasenverzögerung umfasst, die über einen der Bildpunkte zunimmt und sich für jeden Bildpunkt wiederholt.

13. Vorrichtung nach Anspruch 12, wobei die Bildpunkte zwei im Wesentlichen orthogonale Richtungen in einer Ebene des SLM definieren, wobei die Phasenverzögerung über einen der Bildpunkte zunimmt und sich für jeden Bildpunkt in einer der orthogonalen Richtungen wiederholt, und wobei die Phasenverzögerung in der anderen der orthogonalen Richtungen im Wesentlichen konstant ist.

14. Vorrichtung nach Anspruch 12 oder 13, wobei das Muster von Phasenverzögerung ein gestuftes Muster mit einer gestuften Phasenverschiebung über jeden der SLM-Bildpunkte umfasst, wobei die gestufte Phasenverschiebung zwei oder mehr verschiedene Phasenverzögerungen aufweist, insbesondere
wobei eine Differenz zwischen Phasenverzögerungen der verschiedenen Phasenverzögerungen über einen der SLM-Bildpunkte gemäß der Gleichung:

$$step = \pi \div (2\ x\ levels)$$

bestimmt wird, wobei *step* die Differenz zwischen Phasenverzögerungen ist und *levels* die Zahl der verschiedenen Phasenverzögerungen ist.

15. Vorrichtung nach Anspruch 12, 13 oder 14, wobei der SLM einen reflektierenden Flüssigkristall-SLM umfasst und wobei das Muster im Wesentlichen parallele Streifen umfasst, mindestens einen der Streifen pro Bildpunktlinie, wobei jeder Streifen Regionen mit jeweiligen Bildpunkten einer Bildpunktlinie des SLM umfasst, wobei eine der Regionen in einem der Bildpunkte eine verschiedene Phasenverzögerung zu einer anderen der Regionen innerhalb desselben der Bildpunkte aufweist.

**Revendications**

1. Procédé d'affichage d'une image bidimensionnelle (302) de manière holographique en utilisant un modulateur de lumière spatial (SLM), ledit SLM (400) comportant une pluralité de pixels de SLM (402), le procédé consistant à :

déterminer et afficher un motif de diffraction sur lesdits pixels dudit SLM ; et
éclairer lesdits pixels dudit SLM de sorte que la lumière diffractée par ledit motif de diffraction sur lesdits pixels de SLM comprenne un contenu de ladite image (302) à afficher de manière holographique dans un champ de reproduction, dans lequel une variation de la luminosité de ladite image affichée dans ladite image affichée est modulée par une enveloppe d'intensité déterminée par un motif de diffraction d'un dit pixel individuel ; et dans lequel le procédé est **caractérisé par** l'éloignement de ladite enveloppe d'intensité d'un point non diffracté d'ordre zéro (304) au centre dudit champ de reproduction et son rapprochement d'un centre de ladite image affichée (302) en imposant un motif de retard de phase sur lesdits pixels de SLM, ledit motif de retard de phase se répétant à un intervalle spatial correspondant à un intervalle de pixel dudit SLM, et dans lequel ledit motif de diffraction est déterminé de sorte que ladite image affichée soit décalée dudit point non diffracté d'ordre zéro.

2. Procédé selon la revendication 1, dans lequel ledit SLM comprend un SLM multiphase dans lequel un dit pixel de SLM a plus de deux retards de phase sélectionnables, dans lequel ledit motif de diffraction affiché sur lesdits pixels dudit SLM comprend un motif avec plus de deux valeurs de phase différentes, et dans lequel le procédé comprend en outre la détermination dudit motif de diffraction pour l'affichage de sorte qu'une image conjuguée de ladite image affichée soit supprimée.

3. Procédé selon la revendication 1 ou 2, dans lequel ledit motif de retard de phase sur lesdits pixels de SLM comprend un retard de phase qui augmente sur un dit pixel et se répète pour chaque pixel.

4. Procédé selon la revendication 3, dans lequel ledit retard de phase augmente dans une direction à l'opposé de laquelle ladite enveloppe d'intensité est déplacée.

5. Procédé selon la revendication 4, consistant en outre à entrer des données d'image définissant ladite image à afficher de manière holographique ; positionner ladite image définie par lesdites données d'image dans une moitié d'un plan de données d'image bissecté dans une direction perpendiculaire à ladite direction à l'opposé de laquelle ladite enveloppe d'intensité est déplacée ; et déterminer ensuite ledit motif de diffraction à partir des données dans les deux moitiés dudit plan de données d'image.

6. Procédé selon l'une quelconque des revendications précédentes, dans lequel ledit SLM est un SLM à réflexion, et dans lequel ledit motif de retard de phase sur lesdits pixels de SLM comprend un motif de retard de phase configuré pour déplacer ladite enveloppe d'intensité d'une distance, dans ladite image affichée, qui correspond à une variation du déphasage sensiblement de $\pi/2$ sur un dit pixel.

7. Procédé selon la revendication 6, dans lequel ledit motif de retard de phase comprend un motif de pas qui est un déphasage par pas sur chaque dit pixel de SLM, ledit déphasage par pas ayant deux retards de phase différents ou plus.

**8.** Procédé selon la revendication 7, consistant en outre à déterminer une différence entre les retards de phase desdits différents retards de phase sur un dit pixel de SLM selon l'équation :

$$pas = \pi \div (2 \text{ x niveaux})$$

où « pas » est la différence entre les retards de phase et « niveaux » est le nombre de retards de phase différents.

**9.** Procédé selon la revendication 7 ou 8, dans lequel ledit SLM comprend un SLM à réflexion, et dans lequel ledit motif de pas comprend un motif de bandes en travers d'une partie de réflexion dudit SLM dans une direction sensiblement perpendiculaire à une direction dans laquelle ladite enveloppe d'intensité est déplacée.

**10.** Procédé selon l'une quelconque des revendications précédentes, consistant en outre à déterminer ledit motif de diffraction pour l'affichage en utilisant un procédé du type OSPR.

**11.** Dispositif d'affichage d'une image bidimensionnelle de manière holographique, le dispositif comprenant :

un modulateur de lumière spatial (SLM), ledit SLM (400) comportant une pluralité de pixels de SLM (402) ;
des moyens (100) pour déterminer et afficher un motif de diffraction sur lesdits pixels dudit SLM ;
un laser (20) pour éclairer lesdits pixels dudit SLM de sorte que la lumière diffractée par ledit motif de diffraction sur lesdits pixels de SLM comprenne un contenu de ladite image (302) à afficher de manière holographique dans un champ de reproduction, dans lequel une variation de la luminosité de ladite image affichée dans ladite image affichée est modulée par une enveloppe d'intensité déterminée par un motif de diffraction d'un dit pixel individuel ; et

**caractérisé en ce que** ledit dispositif est configuré pour éloigner ladite enveloppe d'intensité d'un point non diffracté d'ordre zéro (304) au centre dudit champ de reproduction et la rapprocher d'un centre de ladite image affichée (302) en imposant un motif de retard de phase sur lesdits pixels de SLM, ledit motif de retard de phase se répétant à un intervalle spatial correspondant à un intervalle de pixel dudit SLM, et dans lequel ledit motif de diffraction est déterminé de sorte que ladite image affichée soit décalée dudit point non diffracté d'ordre zéro.

**12.** Dispositif selon la revendication 11, dans lequel ledit modulateur de lumière spatial (SLM) a un motif de retard de phase sur lesdits pixels, ledit motif comprenant un retard de phase qui augmente sur un dit pixel et se répète pour chaque pixel.

**13.** Dispositif selon la revendication 12, dans lequel lesdits pixels définissent deux directions sensiblement orthogonales dans un plan dudit SLM, dans lequel ledit retard de phase augmente sur un dit pixel et se répète pour chaque pixel dans l'une desdites directions orthogonales, et dans lequel ledit retard de phase est sensiblement constant dans l'autre desdites directions orthogonales.

**14.** Dispositif selon la revendication 12 ou 13, dans lequel ledit motif de retard de phase comprend un motif de pas qui est un déphasage par pas sur chaque dit pixel de SLM, ledit déphasage par pas ayant deux retards de phase différents ou plus, en particulier
dans lequel une différence entre les retards de phase desdits différents retards de phase sur un dit pixel de SLM est déterminée selon l'équation :

$$pas = \pi \div (2 \text{ x niveaux})$$

où « pas » est la différence entre les retards de phase et « niveaux » est le nombre de retards de phase différents.

**15.** Dispositif selon la revendication 12, 13 ou 14, dans lequel ledit SLM comprend un SLM à cristaux liquides à réflexion, et dans lequel ledit motif comprend des bandes sensiblement parallèles, au moins une dite bande par ligne de pixels, chaque dite bande comprenant des régions dans des pixels respectifs d'une ligne de pixels du SLM, une dite région dans un dit pixel ayant un retard de phase différent de celui d'une autre dite région dans le même dit pixel.

Figure 1

Figure 2

Figure 3a

Figure 3b

Figure 3c

Figure 3d

Figure 3e

Figure 3f

Figure 4a

Figure 4b

Figure 4c

Figure 4d

Figure 5a

Figure 5b

Figure 6a

Figure 6b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005059660 A
- WO 2006134398 A
- WO 2006134404 A
- WO 2007031797 A
- WO 2007085874 A

- WO 2007110668 A
- EP 1702243 A
- EP 1498766 A
- US 20060238836 A
- GB 0610784 A

**Non-patent literature cited in the description**

- **Palima D. ; Daria V.R.** Holographic projection of arbitrary light patterns with a suppressed zero-order beam. *Applied Optics,* 2007, vol. 46 (20